# EUROPÄISCHE PATENTSCHRIFT

(11) **EP 0 841 877 B1**
(45) Veröffentlichungstag und Bekanntmachung des Hinweises auf die Patenterteilung: **13.10.1999**
(21) Anmeldenummer: 95930420.5
(22) Anmeldetag: 28.07.1995
(51) Int. Cl.: A61C 7/16

(54) **IM MUND ZU TRAGENDE ZAHNTECHNISCHE VORRICHTUNG, INSBESONDERE IN FORM EINES BRACKETS**
DENTAL APPLIANCE, TO BE WORN IN THE MOUTH, IN PARTICULAR IN THE FORM OF A BRACKET
APPAREIL DENTAIRE SE PRESENTANT NOTAMMENT SOUS FORME DE BRACKET, A PORTER DANS LA BOUCHE

(43) Veröffentlichungstag der Anmeldung: 20.05.1998
(73) Patentinhaber: DENTAURUM J.P. WINKELSTROETER KG, 75228 Ispringen (DE)
(72) Erfinder: BINDER, Friedrich, D-75249 Kieselbronn (DE)
(74) Vertreter: Hoeger, Stellrecht & Partner
(86) Internationale Anmeldenummer: EP9503007
(87) Internationale Veröffentlichungsnummer: WO9704717

(56) Entgegenhaltungen:
- EP-A- 0 227 944
- US-A- 4 100 678

## Beschreibung

Sogenannte orthodontische Hilfsteile, wie Brackets, Bukkalröhrchen und Bänder, dienen zur Übertragung von Kräften auf Zähne und müssen Zu diesem Zweck auf den Zähnen befestigt werden. Dies geschieht mittels eines Klebers, jedoch sind die hierfür zur Verfügung stehenden handelsüblichen Kleber nicht in der Lage, ohne Weiteres einen hinreichend starken Verbund zwischen der dem Zahn zugewandten Basisfläche z.B. eines Brackets aus Metall oder keramischem Material einerseits und Kleber andererseits bzw. zwischen diesem und der Zahnoberfläche herzustellen, um die gewünschten, relativ hohen Kräfte von dem orthodontischen Hilfsteil auf den Zahn zu übertragen. Es ist deshalb erforderlich, zusätzlich zu dem vom Kleber erzeugten chemischen (stoffschlüssigen) Verbund einen mechanischen (formschlüssigen) Verbund herzustellen, der auf dem Prinzip von Hinterschneidungen (sogenannte Retentionen) beruht, die in den miteinander zu verklebenden Bereichen von orthodontischem Hilfsteil und Zahn hergestellt werden und die auch eine Vergrößerung der Oberflächen der miteinander zu verklebenden Bereiche zur Folge haben. Um in demjenigen Bereich der Zahnoberfläche, auf den das orthodontische Hilfsteil aufgeklebt werden soll, kleinste Retentionen, sogenannte Mikroretentionen, zu erzeugen, ist es üblich, dort den Zahnschmelz mit PhosphorSäure anzuätzen.

Auf der Basisfläche des orthodontischen Hilfsteiles, d.h. also auf der dem Zahn zugewandten Fläche beispielsweise eines Bracketkörpers, werden Retentionen am häufigsten dadurch geschaffen, daß man mit dieser Basisfläche ein auf einer Metallfolie oder einem Blech befestigtes Drahtnetzgeflecht verbindet, z.B. durch Schweißen oder Löten. Der Kleber dringt dann in das Drahtnetzgeflecht ein und verankert dadurch das orthodontische Hilfsteil in dem ausgehärteten Kleber (siehe z.B. US-PS 5,295,823).

Aus der US-PS 5,295,823 ist es auch schon bekannt, die Verankerung des mit einem solchen Drahtnetzgeflecht versehenen orthodontischen Hilfsteil im Kleber dadurch noch weiter zu verstärken, daß die mit dem Kleber zu benetzenden Oberflächenbereiche des Drahtnetzgeflechtes und die von letzterem nicht abgedeckten Bereiche der Basisfläche des orthodontischen Hilfsteils zusätzlich aufgerauht werden, sei es durch Ätzen, Sand- oder Kugelstrahlen oder durch Ablagern kleinster Teilchen auf diesen Oberflächenbereichen, wofür aus dem Stand der Technik die unterschiedlichsten Methoden bekannt sind.

Alle diese vorstehend beschriebenen bekannten Verfahren zur Erzielung der erforderlichen Haftfestigkeit haben aber zum einen den Nachteil, daß sie verhältnismäßig hohe Herstellkosten verursachen, und zum anderen haben sie zur Folge, daß unterschiedliche Werkstoffe in direkten Kontakt miteinander kommen - Werkstoff des eigentlichen orthodontischen Hilfsteils, Werkstoff des Drahtnetzgeflechtes, Werkstoff der zur Oberflächenvergrößerung bzw. Aufrauhung der Flächen auf letztere aufgebrachten Partikel und gegebenenfalls noch das Lot, mit dessen Hilfe das Drahtnetzgeflecht mit dem eigentlichen orthodontischen Hilfsteil verbunden wird. Im Mund mit dem Speichel als Elektrolyten führen jedoch unterschiedliche Metalle zur Ausbildung eines galvanischen Elements und damit zur Korossion des jeweils unedelsten Metalls.

Bei metallischen Brackets ist es schon bekannt (DE-A-35 41 506 bzw. die dieser entsprechende EP-B-0 227 944 und die US-A-4,842,513), die sogenannten Flügel, die zwischen sich einen Schlitz einschließen und auf einer Basisplatte angeordnet sind, aus einer Platine einzeln mittels einer Laserschneidvorrichtung auszuschneiden, sie mit der Basisplatte zu verschweißen und die Unterseite der letzteren unmittelbar als mit dem Zahn zu verklebende Verbindungsfläche auszubilden, wobei die hierfür in der letzteren erforderlichen Retentionen dadurch erzeugt werden, daß in diese Verbindungsfläche mittels eines Laserstrahls Bohrungen eingearbeitet werden, die jeweils die Form eines Kreiskegels mit zur Verbindungsfläche schräger Achse haben und infolgedessen Hinterschneidungen bilden, hinter die der Klebstoff eindringen kann. Zum einen erscheint es jedoch beim derzeitigen Stand der Technik unmöglich, mittels eines Laserstrahls kreiskegelförmige Sacklöcher herzustellen, zum anderen dürften sich an einer Verbindungsfläche mit derartigen Retentionen nicht diejenigen Haftfestigkeiten erzielen lassen, die sich bei der Verwendung eines Drahtnetzgeflechts als Klebebasis ergeben - im letztgenannten Fall liegt die Haftfestigkeit bei Verwendung handelsüblicher Kleber typischerweise zwischen 15 und 30 N/mm².

Haftprobleme ähnlich den vorstehend für orthodontische Hilfsteile geschilderten Problemen ergeben sich aber auch bei Kunstzähnen zwischen der sogenannten Aufbrennkeramikschicht und dem diese tragenden Kunstzahnteil.

Der Erfindung lag die Aufgabe zugrunde, auf einfache und kostengünstige Weise an einer im Mund zu tragenden (intraoralen) zahntechnischen Vorrichtung eine mit Retentionen versehene Verbindungsfläche zu schaffen, die zu der gewünschten Haftfestigkeit führt, ohne daß es erforderlich ist, auf dasjenige Teil, an dem die Verbindungsfläche ausgebildet werden soll, ein Teil oder Teile, insbesondere aus einem anderen Material, aufzubringen.

Ausgehend von einer im Mund zu tragenden zahntechnischen Vorrichtung aus einem aufschmelzbaren Werkstoff, wie sie beispielsweise die DE-A-35 41 506 zeigt, die also eine mit einem Zahnbereich stoff- und formschlüssig zu verbindende Verbindungsfläche aufweist, welche zumindest Retentionsbereiche mit durch Aufschmelzen des Werkstoffs mittels eines Laserstrahls erzeugten Vertiefungen besitzt, von denen wenigstens ein Teil Hinterschneidungen bildet, läßt sich diese Aufgabe erfindungsgemäß dadurch lösen, daß die Retentionsbereiche neben den Vertiefungen eine Vielzahl unregelmäßiger Erhebungen aufweisen, die von dem bei der Ausbildung der Vertiefungen aufgeschmolzenen Werkstoff gebildet sind und von denen wenigstens ein Teil gleichfalls Hinterschneidungen bildet, wobei zumindest ein Teil dieser Erhebungen jeweils ein Volumen besitzt, welches gleich einem Bruchteil des Volumens der größten dieser Vertiefungen ist.

Die Erfindung macht von der Erkenntnis Gebrauch, daß bei Verwendung eines entsprechenden Lasers und bei entsprechender Führung des Laserstrahls über die Verbindungsfläche der die letztere bildende Werkstoff bei der Herstellung der Vertiefungen so aufgeschmolzen und/oder verdampft werden kann, daß er vom Strahldruck und/oder seinem eigenen Dampfdruck an derjenigen Stelle, an der der Laserstrahl auf die Verbindungsfläche auftrifft, aus den sich ausbildenden Vertiefungen herausgeschleudert wird und sich neben den sich ausbildenden Vertiefungen, gegebenenfalls aber auch auf den Wandungen der sich ausbildenden Vertiefungen, wieder ablagert, u.z. in Form unregelmäßiger bzw. unregelmäßig angeordneter Erhebungen, die ihrerseits mindestens zum Teil wieder Hinterschneidungen bilden. Auf diese Weise ergibt sich nicht nur eine Vielzahl kleinerer und größerer Retentionen, sondern auch eine starke Vergrößerung der später mit dem Klebstoff zu benetzenden Oberfläche der zahntechnischen Vorrichtung, und Versuche an erfindungsgemäßen zahntechnischen Vorrichtungen haben ergeben, daß sich auf diese Weise problemlos Haftfestigkeitswerte bis zu 60 N/mm² erzielen lassen, und zwar unabhängig vom Werkstoff der zahntechnischen Vorrichtung, sei es nun ein Metall, ein Kunststoff oder ein keramischer Werkstoff. Aus dem Vor-stehenden wird auch ohne weiteres ersichtlich, daß die Herstellung erfindungsgemäßer Retentionen viel einfacher ist als bei den bekannten zahntechnischen Vorrichtungen - im Gegensatz zu der Herstellung der kreiskegelförmigen Sacklöcher des Brackets nach der DE-A-35 41 506 ist es z.B. nicht erforderlich, den Laserstrahl bezüglich der Basisfläche des Brackets jeweils präzise zu positionieren und auszurichten, da es bei der Herstellung erfindungsgemäßer Retentionen nur darauf ankommt, daß bei der Ausbildung von Vertiefungen das Material aus den im Entstehen begriffenen Vertiefungen herausgeschleudert wird und sich wieder im Bereich der Verbindungsfläche an der zahntechnischen Vorrichtung anlagert.

Durch entsprechende Wahl der Laserparameter lassen sich zahlreiche vorteilhafte Weiterbildungen der Erfindung erreichen, wie sie in den beigefügten Ansprüchen 2 bis 20 definiert sind.

Als besonders vorteilhaft hat sich die Anwendung der Erfindung auf orthodontische Hilfsteile erwiesen, die aus Titan oder einer Titanbasislegierung bestehen, und zwar insbesondere dann, wenn das orthodontische Hilfsteil eine Haut aus einer Titanverbindung, wie Titanoxyd oder Titannitrit, aufweist. Vorteile bringt die Erfindung aber auch bei der Verankerung einer auf ein Kronen- oder Brückengerüst aufzubrennenden Keramikschicht bzw. anzubringenden Verblendungskunststoffschicht an diesem Gerüst mit sich oder beim Verkleben von aneinander zu befestigenden Teilen einer mehrteiligen intraoralen Vorrichtung (z.B. Befestigen der Flügel eines Brackets auf einer Bracket-Basisplatte).

Die Erfindung betrifft ferner ein Verfahren zur Herstellung einer erfindungsgemäßen zahntechnischen Vorrichtung, welches sich dadurch auszeichnet, daß ein Laserstrahl derart über die Verbindungsfläche geführt wird, daß der Vorrichtungswerkstoff an denjenigen Stellen der Verbindungsfläche, an denen Vertiefungen ausgebildet werden, aufgeschmolzen und/oder verdampft wird, dabei aus den entstehenden Vertiefungen herausgeschleudert wird und in der Nachbarschaft der Vertiefungen Erhebungen bildet.

Für die Durchführung des erfindungsgemäßen Verfahrens eignet sich besonders ein sogenannter gütegeschalteter Dauerstrichlaser oder ein gepulster Laser, d.h. die Anwendung eines pulsierenden Laserstrahls, statt dessen oder zusätzlich kann es sich aber auch empfehlen, den Laserstrahl schrittweise über die Verbindungsfläche zu führen.

Als besonders zweckmäßig haben sich Neodym-YAG oder Excimer-Laser erwiesen.

Unter Umständen kann es sich empfehlen, die Behandlung mit dem Laserstrahl in einer Schutzgasatmosphäre durchzuführen, d.h. unter einem Gas, mit dem der Werkstoff der zahntechnischen Vorrichtung während der Behandlung nicht reagiert. Bei bestimmten Materialien, wie z.B. Oxidkeramik, kann aber auch eine Behandlung unter einem reaktiven Gas, wie z.B. Sauerstoff, vorteilhaft sein.

Wird die erfindungsgemäß behandelte Verbindungsfläche nach der Laserstrahlbehandlung mit einem chemischen Beizmittel gebeizt, entfernt man zwar die zuvor erzeugten Erhebungen mehr oder minder weitgehend, es entstehen dafür aber Hinterschneidungen bildende schuppenartige Vertiefungen oder Mikroporen in den Wandungen der mit dem Laserstrahl erzeugten Vertiefungen, so daß sich die Haftfestigkeit nicht nur durch die Wahl der Laserparameter reproduzierbar festlegen läßt, sondern auch durch die Wahl der Art des Beizmittels und/oder der Zeit seiner Einwirkung.

Zum Stand der Technik sei der Vollständigkeit halber noch auf folgende Druckschriften verwiesen: DE-A-39 19 158, Prospekt "Concise" der US-Firma Dental Produkts/3M, Aufsatz "Untersuchungen zur Verbundfestigkeit Metallplasmabeschichteter Bracketbasen" von Droese und Diedrich, Zeitschrift Fortschr. Kieferorthop. 53 (1992), Seiten 142 bis 152, erschienen im Verlag Urban & Vogel, und Aufsatz "Mechanische Mikrostrukturierung metallischer Oberflächen" von Schaller et al, Zeitschrift F & M 102 (1994), Seiten 274 bis 278, erschienen im Carl Hanser Verlag, München.

Im folgenden soll nun die Erfindung anhand der erfindungsgemäßen Ausbildung der unmittelbar als Klebebasis bzw. Verbindungfläche dienenden Basisfläche eines Titan-Brackets, welche in den beiliegenden Zeichnungen und Fotografien dargestellt ist, noch näher erläutert werden; es zeigen:
- Fig. 1:: eine perspektivische Darstellung des Brackets, schräg auf dessen Basisfläche gesehen;
- Fig. 2:: einen Schnitt durch diese Basisfläche und einen Teil des Brackets, und zwar einen quer zu dieser Basisfläche verlaufenden Schnitt in 40-facher Vergrößerung (V = 40);
- Fig. 3A, 3B und 3C:: verschiedene Ausschnitte aus Figur 2 im Bereich der Basisfläche mit V = 250;
- Fig. 4 bis 6C:: elektronenmikroskopische Aufnahmen, und zwar

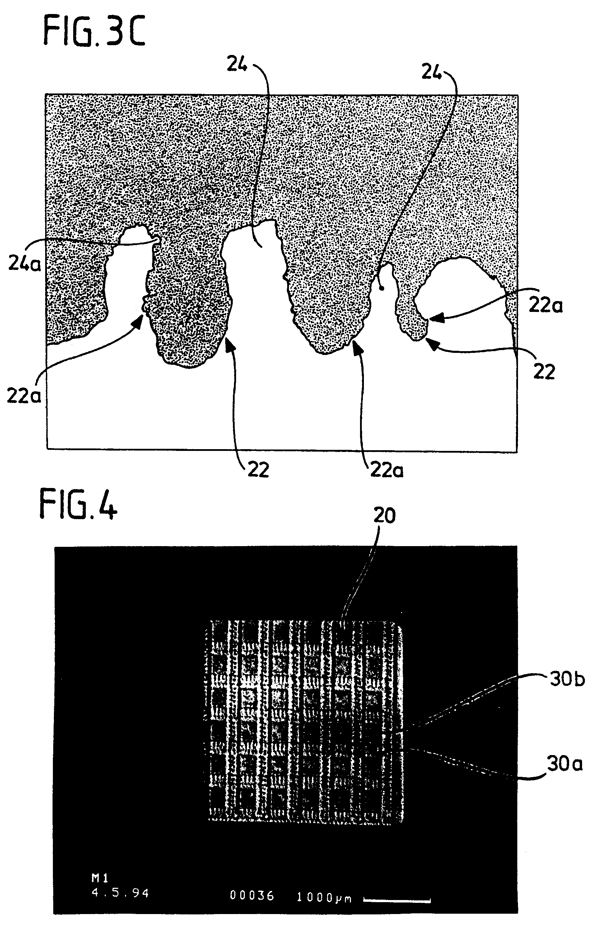

- Fig. 4:: eine Draufsicht auf die Basisfläche des Brackets mit den ein netzförmiges Muster bildenden Retentionsbereichen in 16-facher Vergrößerung (V = 16);
- Fig. 5A:: einen Ausschnitt aus Fig. 4, und zwar in einem Kreuzungsbereich des von den Retentionsbereichen gebildeten netzförmigen Musters mit V = 200;

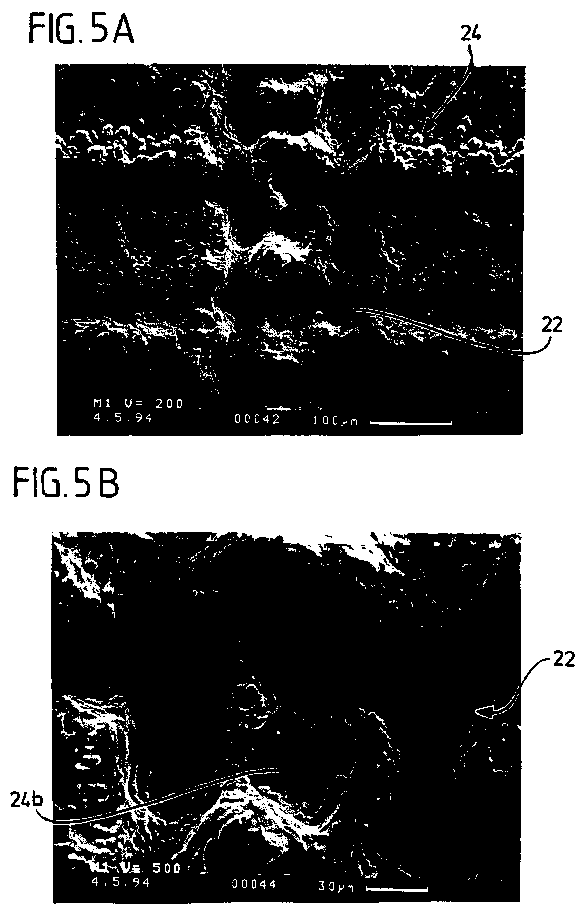

- Fig. 5B:: einen Ausschnitt aus Fig. 5A, und zwar aus dem dort gezeigten Kreuzungsbereich mit V = 500;
- Fig. 5C:: einen Ausschnitt aus Fig. 5B mit V = 1000;

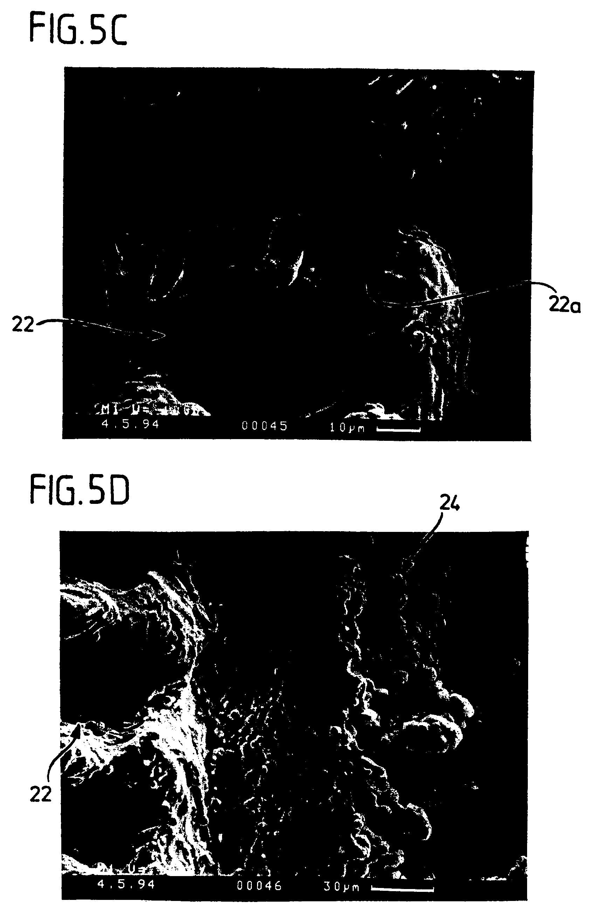

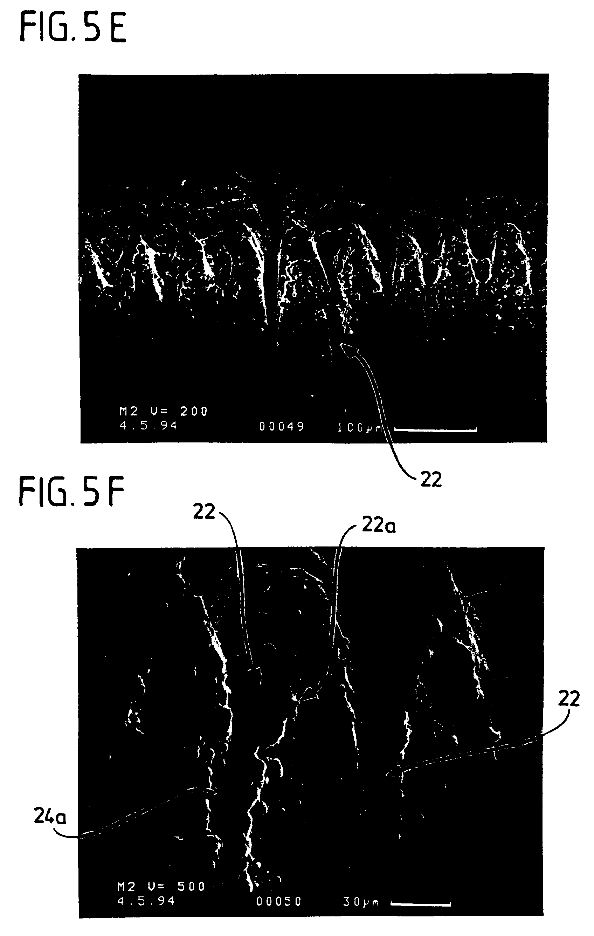

- Fig. 5D:: einen Ausschnitt aus Fig. 5A im Grenzbereich zwischen einem Retentionsbereich und einem an diesen angrenzenden Bereich der Basisfläche mit V = 500;
- Fig. 5E:: eine Seitenansicht eines Retentionsbereichs mit V = 200;
- Fig. 5F:: einen Ausschnitt aus Fig. 5E mit V = 500;

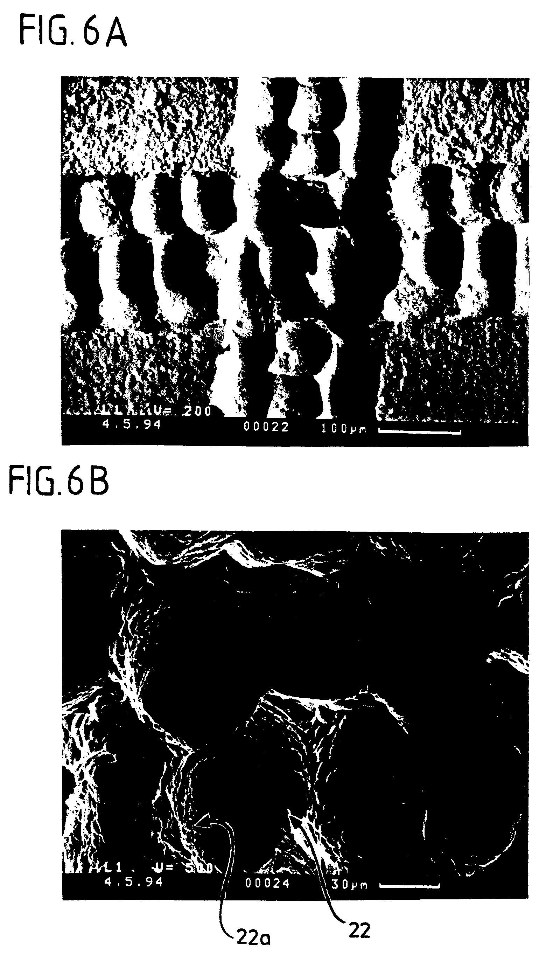

- Fig. 6A:: eine der Fig. 5A entsprechende Darstellung eines Kreuzungsbereichs mit V = 200, jedoch nach dem Beizen der Laserstrahl-behandelten Basisfläche, und

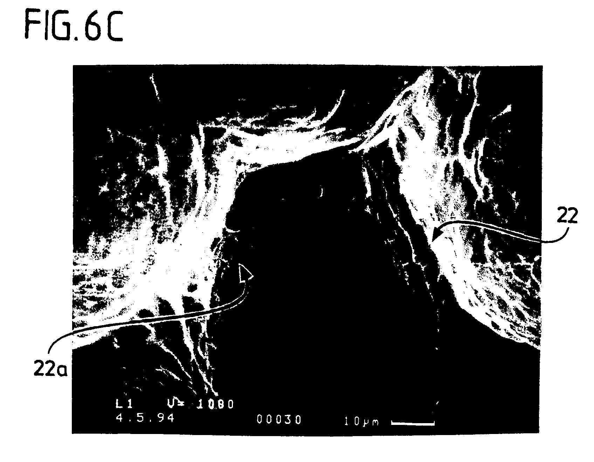

- Fig. 6B und 6C:: einen Ausschnitt aus Fig. 6A mit V = 500 bzw. V = 1000, jedoch in einer leichten Schrägansicht (um 20° gegenüber der Senkrechten auf die Basisfläche geneigt).

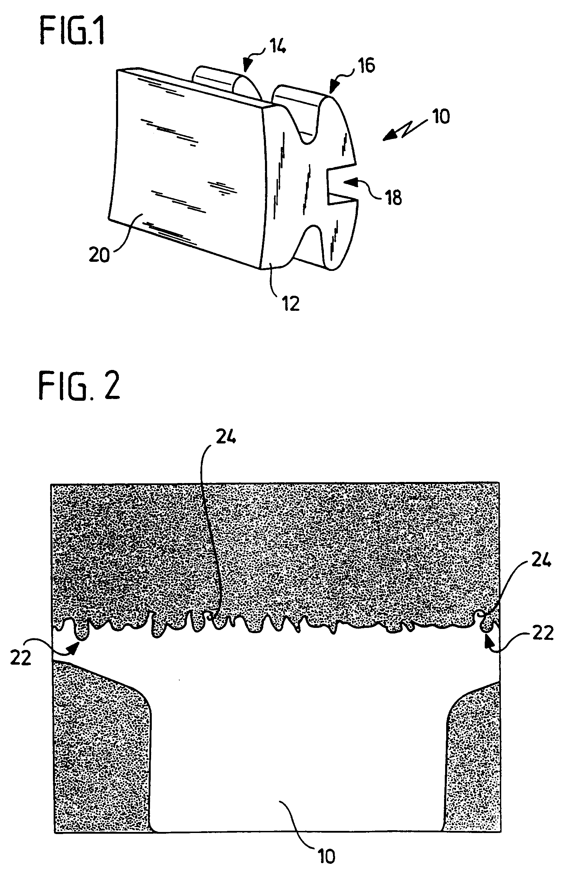

Die Fig. 1 zeigt ein als Ganzes mit 10 bezeichnetes herkömmliches Bracket aus Titan oder einer Titanbasislegierung, welches auf einer Basisplatte 12 zwei Flügel 14 und 16 aufweist, die einen Schlitz 18 zum Einlegen eines Drahtes bilden. Die später dem Zahn zugewandte Unterseite des Brackets 10 bzw. der Basisplatte 12 stellt die Basisfläche 20 des Brackets dar, die bei einem erfindungsgemäßen Bracket gleichzeitig dessen mittels eines Klebstoffs unmittelbar mit einem Zahn zu verbindende Verbindungsfläche darstellen soll.

Bei dem in Fig. 2 dargestellten Ausschnitt aus einem Schnitt durch das nunmehr erfindungsgemäß behandelte Bracket 10 senkrecht zur Verbindungsfläche 20 ist letztere nach oben gekehrt, und bereits die Fig. 2 läßt eine Vielzahl erfindungsgemäß gestalteter Retentionen erkennen. Im folgenden werden als Makroretentionen die vergleichsweise großen Vertiefungen in Form von Sacklöchern sowie die vergleichsweise großen Erhebungen in Form von Schmelzperlen oder dergleichen bezeichnet, soweit diese Vertiefungen und Erhebungen Hinterschneidungen bilden und so bei der Verankerung des Brackets in der Klebstoffschicht eine retentive Wirkung entfalten können. Als Mikroretentionen werden gleichfalls Hinterschneidungen bildende, vergleichsweise jedoch kleine Strukturen bezeichnet, die insbesondere die Gestalt kleiner Vertiefungen in den Wandungen der durch den Laserstrahl erzeugten groben Vertiefungen, aber auch in den Oberflächen der erfindungsgemäß vorhandenen Erhebungen haben.

Die Fig. 2 zeigt Makroretentionen in Form von Vertiefungen 22 und Erhebungen 24.

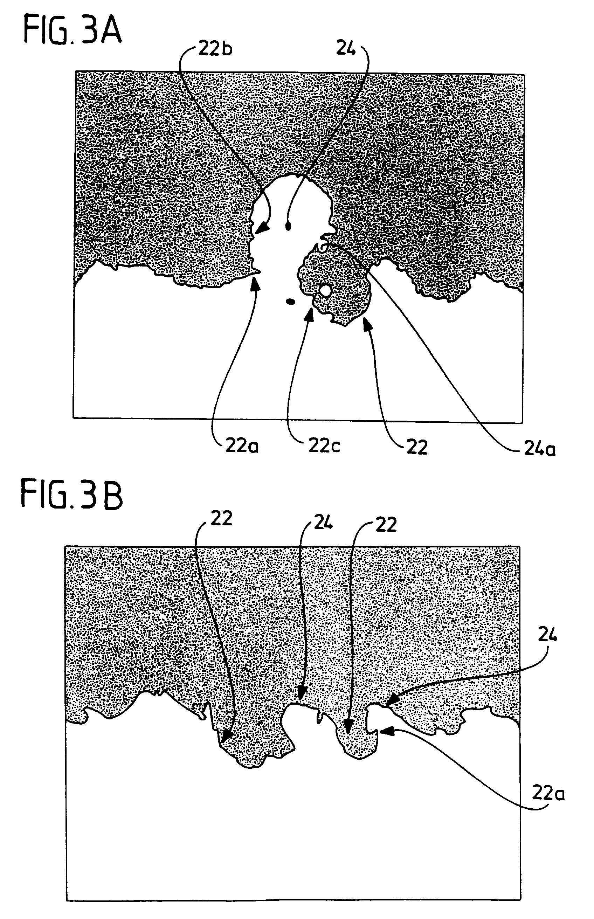

Die Fig. 3A zeigt die beiden in Fig. 2 rechts mit 22 und 24 bezeichneten Makroretentionen in Form einer Vertiefung 22 und einer Erhebung 24, läßt aber infolge der größeren Vergrößerung auch Mikroretentionen erkennen, und zwar sowohl in der Wandung der Vertiefung 22, als auch in und auf der Oberfläche der Erhebung 24, und ein Teil dieser Mikroretentionen in Form kleinster Vertiefungen wurde mit 22a, 22b und 22c bezeichnet, während bei 24a eine Mikroretention in Form einer kleinen Erhebung auf der Oberfläche der Makroretention 24 gezeigt ist. In den Figuren 3B und 3C wurden den Makro- und Mikroretentionen dieselben Bezugszeichen 22 und 24 sowie 22a und 24a zugeordnet.

Während die Fig. 1 die Verbindungsfläche 20 vor der Laserstrahlbehandlung darstellen soll, zeigt die Fig. 4 die Verbindungsfläche 20 nach der Laserbehandlung. Die Fig. 4 zeigt dabei den Fall, daß der Laserstrahl in einem rasterförmigen, d.h. netzförmigen Muster über die Verbindungsfläche 20 geführt wurde, so daß die den Laserspuren entsprechenden Retentionsbereiche auf bzw. in der Verbindungsfläche 20 ein netzförmiges Muster bilden. In Fig. 4 bildet eine Schar von parallel zueinander und horizontal verlaufenden Retentionsbereichen 30a zusammen mit einer Schar von parallel zueinander und vertikal verlaufenden Retentionsbereichen 30b dieses netzförmige Muster. Die Fig. 5A zeigt nun in stärkerer Vergrößerung als Fig. 4 denjenigen Teil der Verbindungsfläche 20, der im Bereich einer Kreuzung eines Retentionsbereichs 30a mit einem Retentionsbereich 30b liegt. In Fig. 5A erkennt man deutlich Makroretentionen in Form von Vertiefungen 22 und neben diesen liegenden Erhebungen 24, wobei es sich bei diesen Erhebungen um ballige oder kugelförmige Ablagerungen, insbesondere Schmelzperlen, des Bracketwerkstoffs handelt.

Die mit stärkerer Vergrößerung aufgenommenen Figuren 5B und 5C lassen wieder Makroretentionen in Form von Vertiefungen 22, aber auch Mikroretentionen in Form von Vertiefungen 22a und kleinsten Erhebungen 24b erkennen.

Sehr deutlich zeigt die Figur 5D, wie in einem Bereich der Verbindungsfläche 20, welcher rechts neben einem Retentionsbereich 30b mit Makroretentionen in Form von Vertiefungen 22 liegt, auf der Verbindungsfläche Makroretentionen in Form von Erhebungen 24 angeordnet sind.

Die Figuren 5E und 5F zeigen Makroretentionen in Form von kappilarförmigen Vertiefungen 22, in deren Wandungen Mikroretentionen in Form kleinster Vertiefungen 22a ausgebildet sind, auf deren Wandungen aber auch Mikroretentionen in Form kleinster Erhebungen 24a abgelagert wurden.

Die der Fig. 5A entsprechende Fig. 6A zeigt, daß nach dem Beizen der laserstrahlbehandelten Verbindungsfläche 20 letztere zwar im Vergleich zu ihrem ursprünglichen Zustand noch eine erhebliche Oberflächenvergrößerung besitzt, die durch die Laserstrahlbehandlung erzeugten Oberflächenstrukturen aber in erheblichem Maß geglattet wurden. Andererseits zeigt der in Fig. 6B gezeigte Ausschnitt aus Fig. 6A, daß die Wandungen der Makroretentionen in Form von Vertiefungen 22 eine Vielzahl von Mikroretentionen in Form kleinster, schuppenartiger Vertiefungen 22a aufweisen. In noch stärkerer Vergrößerung zeigt die Fig. 6C diese Oberflächenstruktur.

Hieraus wird ersichtlich, daß Gegenstand der vorliegenden Erfindung auch eine intraorale Vorrichtung ist, bei der in einer Verbindungsfläche, an der eine Schicht aus Klebstoff oder einem anderen Beschichtungsmaterial (aufzubrennende Keramik, Kunststoff oder dergleichen) zu verankern ist, mit einem Laserstrahl erzeugte Vertiefungen vorhanden sind, in deren Wandungen sich durch Beizen entstandene Mikroretentionen in Form kleinster Vertiefungen befinden.

Erfindungsgemäß wird also der Werkstoff der zunächst glatten Verbindungsfläche der zahntechnischen Vorrichtung mittels eines Laserstrahls insbesondere rasterartig lokal aufgeschmolzen und/oder verdampft; bei diesem lokalen Aufschmelzen oder Verdampfen wird im Zuge der Ausbildung von Vertiefungen in der Verbindungsfläche aus dieser Werkstoff herausgeschleudert, u.z. unter der Wirkung des Strahldrucks oder des eigenen Dampfdrucks des Werkstoffs an derjenigen Stelle, an der der Laserstrahl auf die Verbindungsfläche auftrifft. Der dabei herausgeschleuderte Werkstoff lagert sich neben den Vertiefungen und/oder auf deren Wandungen wieder ab und bildet Erhebungen, insbesondere in Form von kleinen und kleinsten Schmelzperlen. Je nach Einstellung der Laserparameter erhält man eine deutliche Aufrauhung der Verbindungsfläche mit Makro- und Mikroretentionen, deren Hinterschneidungen zusammen mit der deutlichen Oberflächenvergrößerung zu einer festen Verankerung z.B. eines Brackets in einer Klebstoffschicht führen.

Es hat sich gezeigt, daß für die Durchführung des erfindungsgemäßen Verfahrens am besten sogenannte Beschriftungslaser geeignet sind, die den für das Schweißen üblicherweise eingesetzten Lasern vorzuziehen sind. Insbesondere eignen sich Laser mit einer Leistung von weniger als 20 Watt.

Wie sich aus der vorstehenden Beschreibung und den beigefügten Abbildungen ergibt, macht man bei der vorliegenden Erfindung eigentlich von den sonst unerwünschten Fehlern einer Laserstrahlbehandlung Gebrauch - aus dem Werkstück herausgeschleudertes Material soll zumindest zu guten Teilen auf dem Werkstück verbleiben, um dort zusätzliche Retentionen zu bilden, ein Effekt, der im Stand der Technik nirgends auch nur andeutungsweise Erwähnung findet.

## Patentansprüche

1. Im Mund zu tragende zahntechnische Vorrichtung aus einem aufschmelzbaren Werkstoff, die eine mit einem Zahnbereich stoff- und formschlüssig zu verbindende Verbindungsfläche aufweist, welche zumindest Retentionsbereiche mit durch Aufschmelzen des Werkstoffs mittels eines Laserstrahls erzeugten Vertiefungen besitzt, von denen wenigstens ein Teil Hinterschneidungen bildet, dadurch gekennzeichnet, daß die Retentionsbereiche (30a, 30b) neben den Vertiefungen (22) eine Vielzahl unregelmäßiger Erhebungen (24) aufweisen, die von dem bei der Ausbildung der Vertiefungen (22) aufgeschmolzenen Werkstoff gebildet sind und von denen wenigstens ein Teil gleichfalls Hinterschneidungen bildet, wobei zumindest ein Teil dieser Erhebungen (24) jeweils ein Volumen besitzt, welches gleich einem Bruchteil des Volumens der größten dieser Vertiefungen (22) ist.

2. Vorrichtung nach Anspruch 1, dadurch gekennzeichnet, daß die Mehrzahl der Erhebungen (24) jeweils ein Volumen besitzt, welches gleich einem Bruchteil des Volumens der größten Vertiefung (22) ist.

3. Vorrichtung nach Anspruch 1 oder 2 dadurch gekennzeichnet, daß die Vertiefungen (22) von unterschiedlicher Form sind.

4. Vorrichtung nach einem oder mehreren der vorstehenden Ansprüche, dadurch gekennzeichnet, daß die Erhebungen (24) von unterschiedlicher Form sind.

5. Vorrichtung nach einem oder mehreren der vorstehenden Ansprüche, dadurch gekennzeichnet, daß innerhalb eines Retentionsbereichs (30a, 30b) die Vertiefungen (22) unregelmäßig angeordnet sind.

6. Vorrichtung nach einem oder mehreren der vorstehenden Ansprüche, dadurch gekennzeichnet, daß innerhalb eines Retentionsbereichs (30a, 30b) die Erhebungen (24) unregelmäßig angeordnet sind.

7. Vorrichtung nach einem oder mehreren der vorstehenden Ansprüche, dadurch gekennzeichnet, daß ein Teil der Vertiefungen (22, 22a) jeweils ein Volumen besitzt, welches gleich einem Bruchteil des Volumens der größten Vertiefung (22) ist.

8. Vorrichtung nach einem oder mehreren der vorstehenden Ansprüche, dadurch gekennzeichnet, daß ein Teil der Erhebungen (24, 24a) jeweils ein Volumen besitzt, welches gleich einem Bruchteil des Volumens der größten Erhebung (24) ist.

9. Vorrichtung nach einem oder mehreren der vorstehenden Ansprüche, dadurch gekennzeichnet, daß bei mindestens einem Teil der Vertiefungen (22) die Wand der Vertiefung eine unregelmäßige Gestalt hat.

10. Vorrichtung nach einem oder mehreren der vorstehenden Ansprüche, dadurch gekennzeichnet, daß bei mindestens einem Teil der Erhebungen (24) deren Oberfläche eine unregelmäßige Gestalt hat.

11. Vorrichtung nach einem oder mehreren der vorstehenden Ansprüche, dadurch gekennzeichnet, daß sich bei mindestens einem Teil der Vertiefungen (22) in der Vertiefungswand Mikrovertiefungen (22a) befinden.

12. Vorrichtung nach einem oder mehreren der vorstehenden Ansprüche, dadurch gekennzeichnet, daß sich bei mindestens einem Teil der Vertiefungen (22) auf der Vertiefungswand Mikroerhebungen (24a) befinden.

13. Vorrichtung nach einem oder mehreren der vorstehenden Ansprüche, dadurch gekennzeichnet, daß sich bei mindestens einem Teil der Erhebungen (24) in deren Oberfläche Mikrovertiefungen (22b) befinden.

14. Vorrichtung nach einem oder mehreren der vorstehenden Ansprüche, dadurch gekennzeichnet, daß sich bei mindestens einem Teil der Erhebungen (24) auf deren Oberfläche Mikroerhebungen (24a) befinden.

15. Vorrichtung nach einem oder mehreren der vorstehenden Ansprüche, dadurch gekennzeichnet, daß die Retentionsbereiche (30a, 30b) auf der Verbindungsfläche (20) ein Streifenmuster bilden.

16. Vorrichtung nach Anspruch 15, dadurch gekennzeichnet, daß die Retentionsbereiche (30a, 30b) auf der Verbindungsfläche (20) ein netzformiges Muster bilden.

17. Vorrichtung nach einem oder mehreren der vorstehenden Ansprüche, dadurch gekennzeichnet, daß die Verbindungsfläche (20) die mit einem Zahn mittels eines Klebers zu verbindende Basisfläche eines orthodontischen Hilfsteils in Form eines Brackets (10), eines Bukkalröhrchens oder eines Bandes ist.

18. Vorrichtung nach Anspruch 17, dadurch gekennzeichnet, daß das orthodontische Hilfsteil (10) aus Titan oder einer Titanbasislegierung besteht.

19. Vorrichtung nach Anspruch 18, dadurch gekennzeichnet, daß das orthodontische Hilfsteil (10) eine Haut aus einer Titanverbindung aufweist.

20. Vorrichtung nach einem oder mehreren der Ansprüche 1 bis 16, dadurch gekennzeichnet, daß die Retentionsbereiche mit Vertiefungen und Erhebungen an wenigstens einer von mehreren miteinander zu verklebenden Verbindungsflächen von aneinander zu befestigenden Teilen einer intraoralen Vorrichtung ausgebildet sind.

21. Vorrichtung nach einem oder mehreren der Ansprüche 1 bis 16, dadurch gekennzeichnet, daß die Verbindungsfläche an einem mit einer Aufbrennkeramik oder einer Kunststoff-Verblendung zu versehenden Kronen- oder Brückengerüst ausgebildet ist.

22. Verfahren zur Herstellung einer zahntechnischen Vorrichtung nach einem oder mehreren der vorstehenden Ansprüche, dadurch gekennzeichnet, daß ein Laserstrahl derart über die Verbindungsfläche (20) geführt wird, daß Vorrichtungswerkstoff an denjenigen Stellen der Verbindungsfläche (20), an denen Vertiefungen (22, 22a, 22b, 22c) ausgebildet werden, aufgeschmolzen und/oder verdampft wird, dabei aus den entstehenden Vertiefungen herausgeschleudert wird und in den bzw. in der Nachbarschaft der Vertiefungen Erhebungen (24, 24a) bildet.

23. Verfahren nach Anspruch 22, dadurch gekennzeichnet, daß ein gütegeschalteter Dauerstrichlaser oder ein gepulster Laser verwendet wird.

24. Verfahren nach Anspruch 22 oder 23, dadurch gekennzeichnet, daß der Laserstrahl schrittweise über die Verbindungsfläche geführt wird.

25. Verfahren nach einem oder mehreren der Ansprüche 22 bis 24, dadurch gekennzeichnet, daß ein Neodym-YAG Laser verwendet wird.

26. Verfahren nach einem oder mehreren der Ansprüche 22 bis 24, dadurch gekennzeichnet, daß ein ExcimerLaser verwendet wird.

27. Verfahren nach einem oder mehreren der Ansprüche 22 bis 26, dadurch gekennzeichnet, daß die Behandlung mit dem Laserstrahl in einer Schutzgasatmosphäre durchgeführt wird.

28. Verfahren nach einem oder mehreren der Ansprüche 22 bis 26, dadurch gekennzeichnet, daß die Behandlung mit dem Laserstrahl unter einem bei der Behandlung mit dem Werkstoff der Verbindungsfläche reagierenden Gas, insbesondere in einer Sauerstoffatmosphäre, durchgeführt wird.

29. Verfahren nach einem oder mehreren der Ansprüche 22 bis 28, dadurch gekennzeichnet, daß die Verbindungsfläche (20) nach der Laserstrahlbehandlung mit einem Beizmittel gebeizt wird.

## Claims

1. Dental appliance to be worn in the mouth comprising a meltable material having a bonding surface to be bonded to a tooth region in a form-locking and substance-bonding manner, said bonding surface possessing at least retention areas with recesses produced by melting the material by means of a laser beam, at least some of said recesses forming undercuts, characterized in that the retention areas (30a, 30b) have next to the recesses (22) a plurality of irregular elevations (24) formed by the material melted during the formation of the recesses (22), at least some of the elevations likewise forming undercuts, and at least some of these elevations (24) each have a volume equal to a fraction of the volume of the largest of these recesses (22).

2. Appliance as defined in claim 1, characterized in that the plurality of the elevations (24) each has a volume equal to a fraction of the volume of the largest recess (22).

3. Appliance as defined in claim 1 or 2, characterized in that the recesses (22) are of different shapes.

4. Appliance as defined in any or several of the preceding claims, characterized in that the elevations (24) are of different shapes.

5. Appliance as defined in any or several of the preceding claims, characterized in that the recesses (22) are arranged irregularly within a retention area (30a, 30b).

6. Appliance as defined in any or several of the preceding claims, characterized in that the elevations (24) are arranged irregularly within a retention area (30a, 30b).

7. Appliance as defined in any or several of the preceding claims, characterized in that some of the recesses (22, 22a) each have a volume equal to a fraction of the volume of the largest recess (22).

8. Appliance as defined in any or several of the preceding claims, characterized in that some of the elevations (24, 24a) each have a volume equal to a fraction of the volume of the largest elevation (24).

9. Appliance as defined in any or several of the preceding claims, characterized in that in the case of at least some of the recesses (22) the wall of the recess has an irregular shape.

10. Appliance as defined in any or several of the preceding claims, characterized in that in the case of at least some of the elevations (24) their surface has an irregular shape.

11. Appliance as defined in any or several of the preceding claims, characterized in that in the case of at least some of the recesses (22) microrecesses (22a) are located in the recess wall.

12. Appliance as defined in any or several of the preceding claims, characterized in that in the case of at least some of the recesses (22) microelevations (24a) are located on the recess wall.

13. Appliance as defined in any or several of the preceding claims, characterized in that in the case of at least some of the elevations (24) microrecesses (22b) are located in their surface.

14. Appliance as defined in any or several of the preceding claims, characterized in that in the case of at least some of the elevations (24) microelevations (24a) are located on their surface.

15. Appliance as defined in any or several of the preceding claims, characterized in that the retention areas (30a, 30b) form a striped pattern on the bonding surface (20).

16. Appliance as defined in claim 15, characterized in that the retention areas (30a, 30b) form a net-like pattern on the bonding surface (20).

17. Appliance as defined in any or several of the preceding claims, characterized in that the bonding surface (20) is the base surface of an orthodontic accessory in the form of a bracket (10), a buccal tube or a band, which base surface is to be bonded to a tooth by means of an adhesive.

18. Appliance as defined in claim 17, characterized in that the orthodontic accessory (10) consists of titanium or a titanium-based alloy.

19. Appliance as defined in claim 18, characterized in that the orthodontic accessory (10) has a skin consisting of a titanium compound.

20. Appliance as defined in any or several of claims 1 to 16, characterized in that the retention areas are designed with recesses and elevations on at least one of several bonding surfaces to be adhered to one another of parts of an intraoral appliance to be secured to one another.

21. Appliance as defined in any or several of claims 1 to 16, characterized in that the bonding surface is formed on a crown or bridge framework to be provided with burn-on ceramics or a plastics facing.

22. Method for manufacturing a dental appliance as defined in any or several of the preceding claims, characterized in that a laser beam is guided over the bonding surface (20) in such a manner that appliance material is melted and/or vaporized at those points of the bonding surface (20) where recesses (22, 22a, 22b, 22c) are formed, is thereby ejected from the resulting recesses and forms elevations (24, 24a) in the or in the vicinity of the recesses.

23. Method as defined in claim 22, characterized in that a Q-switched continuous wave laser or a pulsed laser is used.

24. Method as defined in claim 22 or 23, characterized in that the laser beam is guided in steps over the bonding surface.

25. Method as defined in any or several of claims 22 to 24, characterized in that a neodymium YAG laser is used.

26. Method as defined in any or several of claims 22 to 24, characterized in that an excimer laser is used.

27. Method as defined in any or several of claims 22 to 26, characterized in that the treatment with the laser beam is carried out in a protective gas atmosphere.

28. Method as defined in any or several of claims 22 to 26, characterized in that the treatment with the laser beam is carried out using a gas reacting with the material of the bonding surface during the treatment, in particular, in an oxygen atmosphere.

29. Method as defined in any or several of claims 22 to 28, characterized in that the bonding surface (20) is etched with an etching agent following the laser beam treatment.

## Revendications

1. Appareil dentaire à porter dans la bouche en matériau fusible, qui présente une surface de liaison à relier par coopération de matières et de formes avec une région d'une dent, laquelle surface possède au moins des zones de rétention avec des renfoncements réalisés par fusion du matériau au moyen d'un faisceau laser, dont une partie au moins forme des contre-dépouilles, caractérisé en ce que les zones de rétention (30a, 30b) présentent, à côté des renfoncements (22), une multitude de surélévations irrégulières (24) qui sont formées par le matériau fondu lors de la réalisation des renfoncements (22) et dont une partie au moins forme également des contre-dépouilles, une partie au moins de ces surélévations (24) possédant un volume qui est égal à une fraction du volume du plus grand de ces renfoncements (22).

2. Appareil selon la revendication 1, caractérisé en ce que la pluralité des surélévations (24) possèdent chacune un volume qui est égal à une traction du volume du renfoncement le plus grand (22).

3. Appareil selon l'une ou l'autre des revendications 1 et 2, caractérisé en ce que les renfoncements (22) présentent différentes formes.

4. Appareil selon l'une ou plusieurs des revendications précédentes, caractérisé en ce que les surélévations (24) présentent différentes formes.

5. Appareil selon l'une ou plusieurs des revendications précédentes; caractérisé en ce qu'à l'intérieur d'une zone de rétention (30a, 30b) les renfoncements (22) sont disposés de façon irrégulière.

6. Appareil selon l'une ou plusieurs des revendications précédentes, caractérisé en ce qu'à l'intérieur d'une zone de rétention (30a, 30b) les surélévations (24) sont disposées de façon irrégulière.

7. Appareil selon l'une ou plusieurs des revendications précédentes; caractérisé en ce qu'une partie des renfoncements (22, 22a) possèdent chacun un volume qui est égal à une fraction du volume du renfoncement le plus grand (22).

8. Appareil selon l'une ou plusieurs des revendications précédentes, caractérisé en ce qu'une partie des surélévations (24, 24a) possèdent chacune un volume qui est égal à une fraction du volume de la surélévation la plus grande (24).

9. Appareil selon l'une ou plusieurs des revendications précédentes, caractérisé en ce que dans une partie au moins des renfoncements (22), la paroi du renfoncement présente une forme irrégulière.

10. Appareil selon l'une ou plusieurs des revendications précédentes, caractérisé en ce que dans une partie au moins des surélévations (24), leur surface présente une forme irrégulière.

11. Appareil selon l'une ou plusieurs des revendications précédentes, caractérisé en ce que dans une partie au moins des renfoncements (22), des micro-renfoncements (22a) se trouvent dans la paroi du renfoncement.

12. Appareil selon l'une ou plusieurs des revendications précédentes, caractérisé en ce que dans une partie au moins des renfoncements (22), des micro-surélévations (24a) se trouvent sur la paroi du renfoncement.

13. Appareil selon l'une ou plusieurs des revendications précédentes, caractérisé en ce que dans une partie au moins des surélévations (24), des micro-renfoncements (22b) se trouvent dans leur surface.

14. Appareil selon l'une ou plusieurs des revendications précédentes: caractérisé en ce que dans une partie au moins des surélévations (24); des micro-surélévations (24a) se trouvent sur leur surface.

15. Appareil selon l'une ou plusieurs des revendications précédentes, caractérisé en ce que les zones de rétention (30a, 30b) forment un motif à rayures sur la surface de liaison (20).

16. Appareil selon la revendication 15, caractérisé en ce que les zones de rétention (30a, 30b) forment un motif grillagé sur la surface de liaison (20).

17. Appareil selon l'une ou plusieurs des revendications précédentes, caractérisé en ce que la surface de liaison (20) est la surface de base à relier à une dent au moyen d'une colle d'un auxiliaire orthodontaire sous forme d'un bracket (10), d'un tube buccal ou d'une bande.

18. Appareil selon la revendication 17, caractérisé en ce que l'auxiliaire orthodontaire (10) est constitué en titane ou en un alliage à base de titane.

19. Appareil selon la revendication 18, caractérisé en ce que l'auxiliaire orthodontaire (10) présente une peau en composé de titane.

20. Appareil selon l'une ou plusieurs des revendications 1 à 16, caractérisé en ce que les zones de rétention présentant des renfoncements et des surélévations sont réalisées sur une au moins parmi plusieurs surfaces de liaison à coller les unes avec les autres de pièces à fixer les unes sur les autres d'un appareil intra-oral.

21. Appareil selon l'une ou plusieurs des revendications 1 à 16, caractérisé en ce que la surface de liaison est réalisée sur une structure de bridge ou de couronne à pourvoir d'un habillage à céramique ou d'une couche de parement en matière plastique.

22. Procédé pour réaliser un appareil dentaire selon l'une ou plusieurs des revendications précédentes, caractérisé en ce que l'on guide un faisceau laser sur la surface de liaison (20) de telle sorte que le matériau de l'appareil est fondu et/ou évaporé à ceux des emplacements de la surface de liaison (20) auxquels se forment les renfoncements (22, 22a, 22b, 22c), et en ce qu'il est éjecté hors des renfoncements qui se forment et forme des surélévations (24, 24a) au voisinage des renfoncements.

23. Procédé selon la revendication 22, caractérisé en ce que l'on applique un laser en régime continu à modulation de qualité ou bien un laser pulsé.

24. Procédé selon l'une ou l'autre des revendications 22 et 23, caractérisé en ce que l'on guide le faisceau laser pas à pas sur la surface de liaison.

25. Procédé selon l'une ou plusieurs des revendications 22 à 24, caractérisé en ce que l'on utilise un laser YAG-néodyme.

26. Procédé selon l'une ou plusieurs des revendications 22 à 24, caractérisé en ce que l'on utilise un laser excimer.

27. Procédé selon l'une ou plusieurs des revendications 22 à 26, caractérisé en ce que l'on effectue le traitement au faisceau laser dans une atmosphère contrôlée.

28. Procédé selon l'une ou plusieurs des revendications 22 à 26, caractérisé en ce que l'on effectue le traitement au faisceau laser sous un gaz réagissant lors du traitement avec le matériau de la surface de liaison, en particulier dans une atmosphère d'oxygène.

29. Procédé selon l'une ou plusieurs des revendications 22 à 28, caractérisé en ce qu'après le traitement au faisceau laser, on décape la surface de liaison (20) avec un agent de décapage.
